# EUROPEAN PATENT APPLICATION

(11) **EP 4 414 580 A1**
(43) Date of publication of application: **14.08.2024**
(21) Application number: 23213929.5
(22) Date of filing: 04.12.2023
(51) Int. Cl.: F16D 65/00, F16D 65/12

(54) **DISC BRAKE DEVICE AND STRADDLED VEHICLE**

(30) Priority: 07.02.2023 JP 2023016870
(71) Applicant: Yamaha Hatsudoki Kabushiki Kaisha, Iwata-shi, Shizuoka-ken 438-8501 (JP)
(72) Inventor: KITAJIMA, Takuro, Iwata-shi, 438-8501 (JP)
(74) Representative: Studio Torta S.p.A.

(57) **Abstract**

There is disclosed a disc brake device (7) wherein a disc rotor (20) has a large heat capacity and judder due to corrosion is less likely to occur; the disc rotor (20) of a disc brake device including: a contact portion (21) to be in contact with a cylindrical portion (11) of a wheel hub (10); and an inner extension (22) that is located closer to a central axis (5C) than the contact portion (21), is facing a ring-shaped portion (12) of the wheel hub (10), and is spaced apart from the ring-shaped portion (12); a plurality of cutouts (23), which are recessed outward in a radial direction, are formed in the inner extension (22).

## Description

### Technical field

The present invention relates to a disc brake device and a straddled vehicle having the same.

### Prior Art

Disc brake devices have been used in the art as brake devices for motorcycles, etc. (see, for example, JP A 2018-109432). A disc brake device includes a disc rotor fixed to the wheel, a brake pad facing the disc rotor, and a brake caliper that presses the brake pad against the disc rotor.

When the brake caliper presses the brake pad against the disc rotor, friction is generated between the brake pad and the disc rotor. The frictional resistance brakes the rotation of the disc rotor. This in turn brakes the wheel that rotates with the disc rotor.

Patent Document No. 1: JP A 2018-109432

During braking, the disc rotor generates frictional heat, which causes the temperature of the disc rotor to rise. If the temperature of the disc rotor rises excessively and exceeds the heat resistance temperature of the disc rotor material, the hardness decreases. This may cause warpage and wear of the disc rotor, and the function of the disc rotor may deteriorate. In order to improve the performance of the disc brake device, it is preferable to increase the heat capacity of the disc rotor.

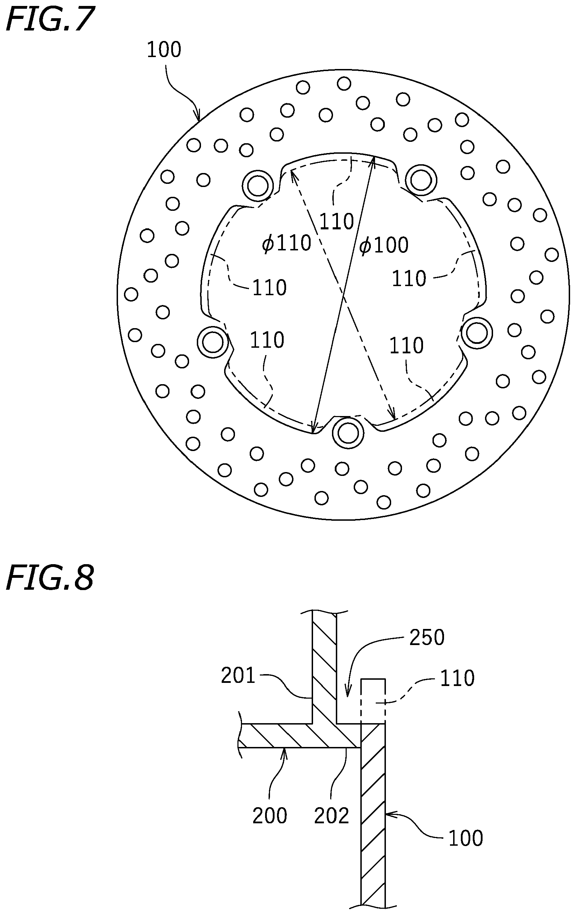

In order to increase the heat capacity of the disc rotor, the present inventors considered increasing the volume of the disc rotor by extending an inner portion of the disc rotor in the radial direction toward the inner side in the radial direction. For example, as shown in FIG. 7, for a disc rotor 100 with an inner diameter of ϕ100, we considered adding an inner extension 110 so that the inner diameter is ϕ110 smaller than ϕ100. This will increase the heat capacity of the disc rotor 100, thus suppressing the temperature rise of the disc rotor 100 as compared with conventional techniques.

FIG. 8 is a partial vertical cross-sectional view of a wheel hub 200 of the wheel and the disc rotor 100. As shown in FIG. 8, the disc rotor 100 may be arranged in contact with a horizontal portion 202 of the wheel hub 200. In such a case, if the disc rotor 100 has the inner extension 110, a recess 250 is formed by a vertical section 201 and a horizontal section 202 of the wheel hub 200 and the inner extension 110 of the disc rotor 100. When a motorcycle, or the like, having a disc brake device is parked, water such as rainwater may collect in this recess 250.

If the motorcycle, etc., is parked for an extended period of time with water remaining collected in the recess 250, the wheel hub 200 or the disc rotor 100 may corrode. If the wheel hub 200 or the disc rotor 100 corrodes, the wheel hub 200 or the disc rotor 100 may be deformed, and vibration (judder) may occur when the disc brake device is activated.

### Description of the invention

The present invention has been in view of the above, and an object thereof is to provide a disc brake device wherein the disc rotor has a large heat capacity and judder due to corrosion is less likely to occur.

A disc brake device disclosed herein is a disc brake device for braking a wheel. The disc brake device includes: a wheel hub including a cylindrical portion having an inner surface and a ring-shaped portion extending from the inner surface of the cylindrical portion toward a central axis of the wheel. The disc brake device includes: a ring-shaped disc rotor arranged perpendicular to the central axis of the wheel; a brake pad facing the disc rotor; and a brake caliper that presses the brake pad against the disc rotor. The disc rotor includes: a contact portion to be in contact with the cylindrical portion of the wheel hub; and an inner extension that is located closer to the central axis of the wheel than the contact portion, is facing the ring-shaped portion of the wheel hub, and is spaced apart from the ring-shaped portion. A plurality of cutouts, which are recessed outward in a radial direction of the wheel, are formed in the inner extension.

With the disc brake device described above, since the disc rotor includes the inner extension, it is possible to increase the volume of the disc rotor. Therefore, it is possible to increase the heat capacity of the disc rotor. However, as the disc rotor includes the inner extension, there is a concern that a recess is formed by the inner extension, the cylindrical portion of the wheel hub and the ring-shaped portion, and water may collect in the recess. However, since the cutouts are formed in the inner extension, water that has collected in the recess is discharged through the cutouts. Thus, water is unlikely to collect in the recess. Since water is unlikely to collect in the recess, the wheel hub and the disc rotor are unlikely to corrode. Thus, judder due to corrosion is unlikely to occur.

A dimension of the cutout in the radial direction of the wheel may be equal to a dimension of the inner extension in the radial direction of the wheel.

Thus, the dimension of the cutout in the radial direction of the wheel is equal to the dimension of the recess in the radial direction of the wheel. Water is unlikely to collect in the recess while ensuring a sufficient heat capacity.

While the collection of water is formed over a large extent in the circumferential direction of the disc rotor, it is a part of the water-collecting section that is located on the lower side where water actually collects. Since the disc rotor rotates, the part of the water-collecting section that is located on the lower side depends on the position of the disc rotor when stopped. In view of this, the cutouts may be arranged at equal angular intervals around the central axis of the wheel.

Thus, the cutouts are arranged evenly in the circumferential direction. Therefore, water is unlikely to collect in the recess regardless of the rotational position of the disc rotor.

The disc rotor may include a plurality of fastened portions where bolt holes are formed and which are arranged in a circumferential direction. The disc brake device may include a plurality of bolts inserted through the bolt holes to fasten together the disc rotor and the wheel hub. The inner extension may include a plurality of extensions, each formed between two fastened portions adjacent to each other in the circumferential direction.

One or more cutouts may be formed in each extension.

Thus, while a recess is formed on the side of each of the plurality of extensions, one or more cutouts are formed in each recess. Therefore, water is unlikely to collect in the recess regardless of the rotational position of the disc rotor.

One or two cutouts may be formed in each extension.

The greater the number of cutouts, the smaller the volume of the disc rotor, and thus the smaller the heat capacity of the disc rotor. According to this, since the number of cutouts is small, water is unlikely to collect in the recess regardless of the rotational position of the disc rotor while ensuring a sufficient heat capacity of the disc rotor.

The cutout may be formed at midpoint of each extension in the circumferential direction.

Thus, water is unlikely to collect in the recess regardless of the rotational position of the disc rotor.

The disc rotor may include a plurality of fastened portions where the bolt holes are formed and arranged in the circumferential direction. The disc brake device may include a plurality of bolts inserted through the bolt holes to fasten together the disc rotor and the wheel hub. A width of the cutout may be less than or equal to an inner diameter of the bolt hole as viewed along the central axis of the wheel.

A width of the cutout may decrease toward an outer side in the radial direction of the wheel as viewed along the central axis of the wheel.

The ring-shaped portion of the wheel hub may include an outer end portion that is located at an outer end of the ring-shaped portion in the radial direction and is continuous with the inner surface of the cylindrical portion. The outer end portion may be curved so that the outer end portion is closer to the disc rotor toward an outer side in the radial direction.

Thus, water is unlikely to collect in the recess because water is unlikely to remain in the outer end portion of the ring-shaped portion.

A straddled vehicle disclosed herein includes the disc brake device set forth above.

### Advantageous Effects Of Invention

According to the present invention, it is possible to provide a disc brake device wherein the disc rotor has a large heat capacity and judder due to corrosion is less likely to occur.

### Brief description of the drawings

FIG. 1 is a right side view of a motorcycle according to one embodiment.
FIG. 2 is a partial cross-sectional view of a brake caliper and a disc rotor.
FIG. 3 is a front view of a rear wheel.
FIG. 4 is a front view of a disc rotor.
FIG. 5 is a partial cross-sectional view taken along line V-V of FIG. 3.
FIG. 6 is a partial cross-sectional view taken along line VI-VI of FIG. 3.
FIG. 7 is a front view of a virtual disc rotor obtained by providing an inner extension in a conventional disc rotor.
FIG. 8 is a cross-sectional view of the virtual disc rotor and a wheel hub.

### Embodiments of the invention

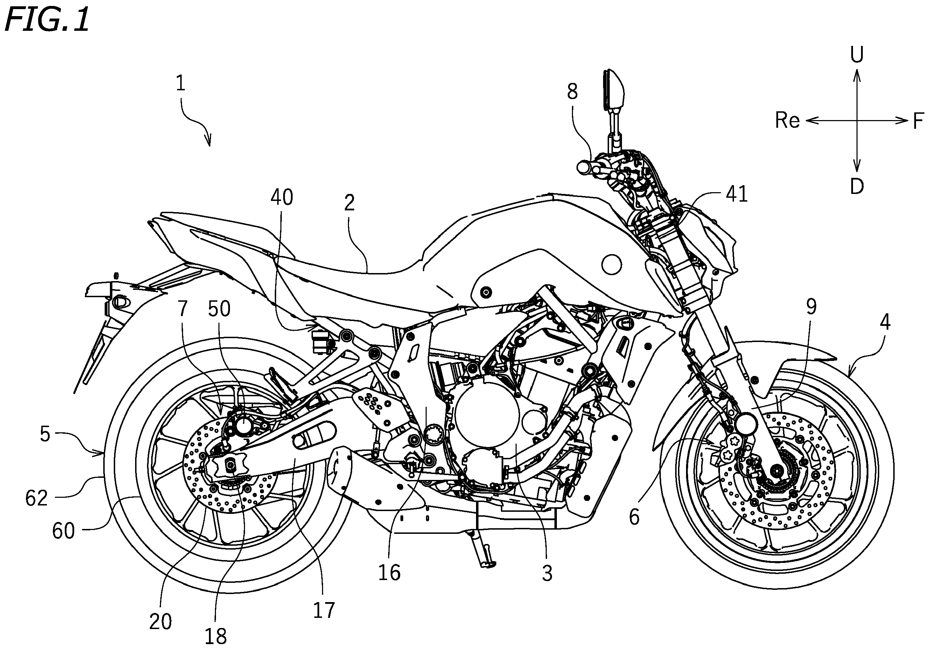

One embodiment of a disc brake device and a straddled vehicle will now be described with reference to the drawings. FIG. 1 is a right side view of a motorcycle 1, which is an example of a straddled vehicle.

The terms front, rear, left, right, up and down, as used in the description below, refer to these directions as seen from a virtual rider seated on a seat 2 while the motorcycle 1 is standing upright on a horizontal surface with no rider and no load thereon, unless specified otherwise. The designations F, Rr, L, R, U and D, as used in the figures, refer to front, rear, left, right, up and down, respectively.

The motorcycle 1 has a vehicle body frame 40 including a head pipe 41, a seat 2 supported by the vehicle body frame 40, an internal combustion engine 3 supported by the vehicle body frame 40, a front wheel 4 and a rear wheel 5. The internal combustion engine 3 is an example of a driving source for traveling. Note however that the driving source for traveling is not limited to the internal combustion engine 3, but may be an electric motor, for example. The motorcycle 1 also includes a disc brake device 6 for braking the front wheel 4 and a disc brake device 7 for braking the rear wheel 5.

A steering shaft (not shown) is rotatably inserted in the head pipe 41. The steering handle 8 is fixed to an upper portion of the steering shaft. The front fork 9 is fixed to a lower portion of the steering shaft. The lower end portion of front fork 9 is supported by the front wheel 4. The front end portion of the rear arm 17 is linked to the vehicle body frame 40 by a pivot shaft 16. The rear end portion of the rear arm 17 is linked to an axle 18 of the rear wheel 5.

The rear wheel 5 includes a wheel 60 rotatably supported on the axle 18 and a tire 62 mounted on the wheel 60.

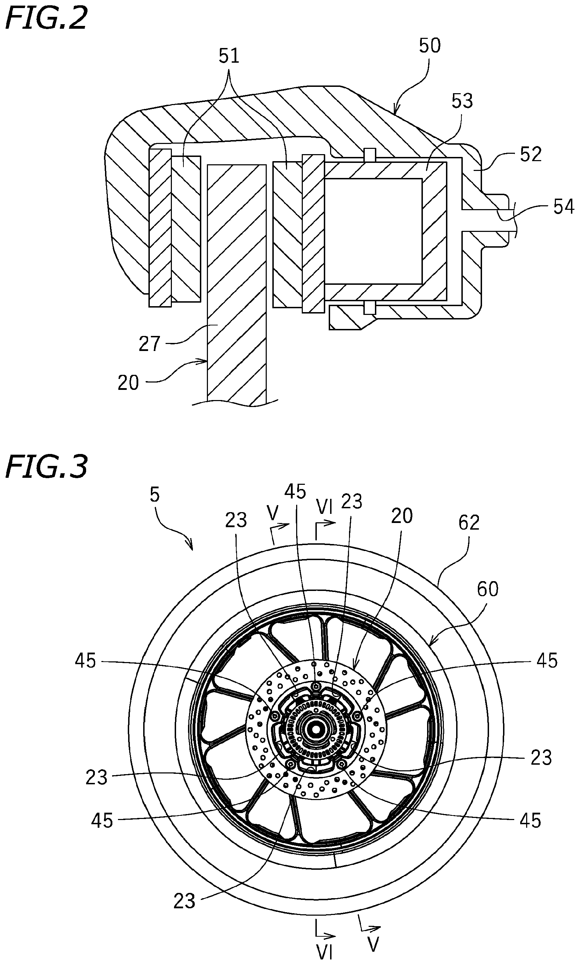

The disc brake device 7 includes a ring-shaped disc rotor 20, a brake pad 51 (see FIG. 2) facing the disc rotor 20, and a brake caliper 50 that presses the brake pad 51 against the disc rotor 20.

Any known brake caliper may be utilized for the brake caliper 50. As shown here in FIG. 2, the brake caliper 50 includes a cylinder 52 and a piston 53 slidably inserted into the cylinder 52. The cylinder 52 includes a port 54, and a master cylinder (not shown) is connected to the port 54 via hydraulic piping (not shown). When the rider operates the brake pedal, brake oil flows from the master cylinder into the cylinder 52 through the port 54. Then, a piston 53 is driven and the brake pad 51 is pressed against the disc rotor 20. Thus, the rear wheel 5 is braked.

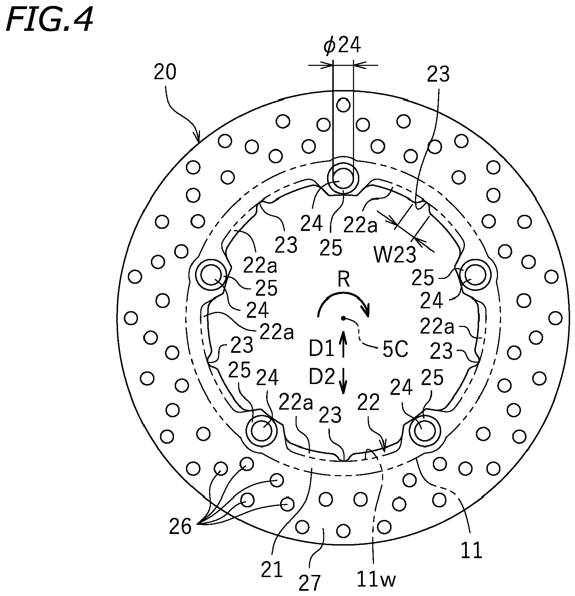

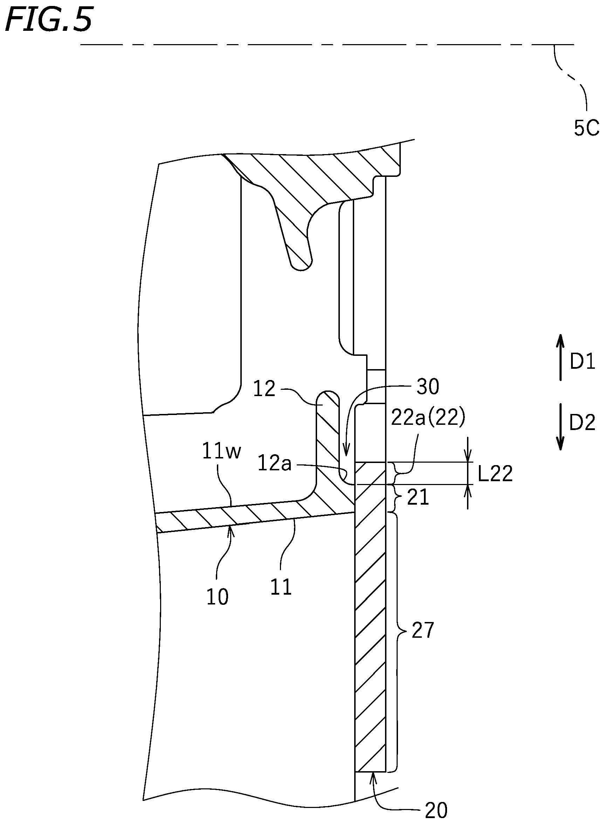

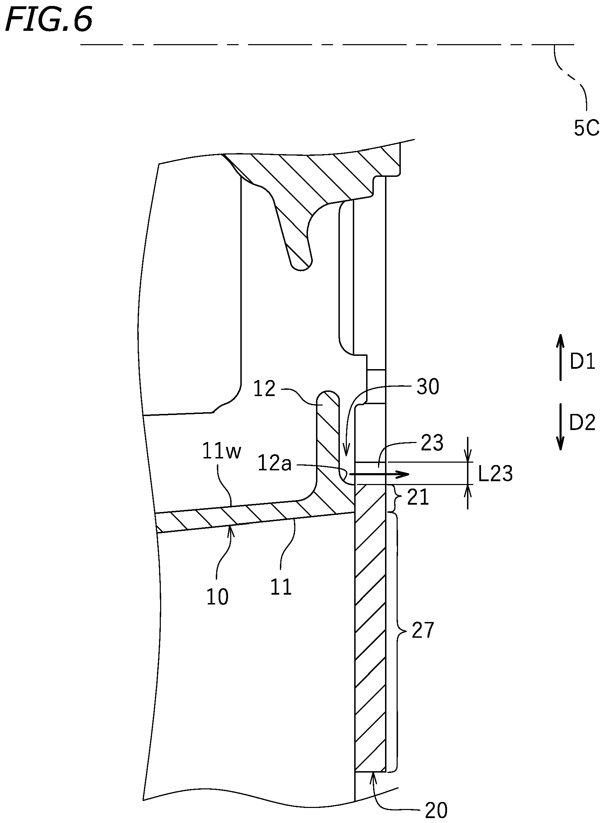

FIG. 3 is a view of the rear wheel 5 as viewed from the right side of the motorcycle 1, and is a front view of the rear wheel 5. FIG. 4 is a view of the disc rotor 20 as viewed from the right side of the motorcycle 1, and is a front view of the disc rotor 20. FIG. 5 is a partial cross-sectional view taken along line V-V of FIG. 3. FIG. 6 is a partial cross-sectional view taken along line VI-VI of FIG. 3.

As shown in FIG. 5, the wheel 60 includes a wheel hub 10. The wheel hub 10 includes a cylindrical portion 11 having an inner surface 11w and a ring-shaped portion 12 extending from the inner surface 11w of the cylindrical portion 11 toward the central axis 5C of the rear wheel 5. As shown in FIG. 4, the center of the cylindrical portion 11 coincides with the central axis 5C of the rear wheel 5.

As shown in FIG. 5, the disc rotor 20 is arranged perpendicular to the central axis 5C. The disc rotor 20 is in contact with the distal end of the cylindrical portion 11 of the wheel hub 10. The disc rotor 20 includes a contact portion 21 that is in contact with the cylindrical portion 11 of the wheel hub 10.

In the following description, the radial direction means the radial direction of the rear wheel 5 and the circumferential direction means the circumferential direction of the rear wheel 5. Inward in the radial direction refers to the direction toward the central axis 5C of the rear wheel 5, and outward in the radial direction refers to the direction away from the central axis 5C of the rear wheel 5. Arrow D1 in the figures indicates inward in the radial direction, and arrow D2 indicates outward in the radial direction (see FIG. 4). Arrow R in the figures indicates the circumferential direction.

As shown in FIG. 5, the disc rotor 20 includes a friction portion 27 located outward in the radial direction from the contact portion 21. The friction portion 27 is a portion that contacts the brake pad 51 (see FIG. 2) during braking. As shown in FIG. 4, a plurality of holes 26 are formed in the friction portion 27. Note however that the holes 26 are optional and may be omitted.

The disc rotor 20 includes a plurality of fastened portions 25 where bolt holes 24 are formed. The fastened portions 25 are arranged in the circumferential direction. Here, five fastened portions 25 are arranged equally spaced in the circumferential direction. As shown in FIG. 3, bolts 45 are fastened to the bolt holes 24. The disc rotor 20 is fixed to the wheel hub 10 by the bolts 45.

As shown in FIG. 4 and FIG. 5, the disc rotor 20 includes an inner extension 22 that is located more toward the central axis 5C than the contact portion 21. The inner extension 22 is located more inward in the radial direction than the contact portion 21. As shown in FIG. 5, the inner extension 22 is facing the ring-shaped portion 12 of the wheel hub 10. The inner extension 22 is spaced apart from the ring-shaped portion 12. A gap is formed between the inner extension 22 and the ring-shaped portion 12. As shown in FIG. 4, the inner extension 22 includes a plurality of extensions 22a, each formed between two fastened portions 25 adjacent to each other in the circumferential direction. Here, the inner extension 22 includes five extensions 22a. As shown in FIG. 5, each extension 22a is facing the ring-shaped portion 12 of the wheel hub 10 and is spaced apart from the ring-shaped portion 12. A gap is formed between each extension 22a and the ring-shaped portion 12.

As shown in FIG. 4, a plurality of cutouts 23 recessed outward in the radial direction are formed in the inner extensions 22. Here, the cutouts 23 are arranged at equal angular intervals around the central axis 5C. Note however that there is no limitation on the interval between the cutouts 23. The cutouts 23 do not need to be arranged at equal angular intervals. While there is no limitation on the number of the cutouts 23, it is preferred that one or more cutouts 23 are formed in each extension 22a. One or two cutouts 23 may be formed in each extension 22a. In the present embodiment, one cutout 23 is formed in each extension 22a. The cutout 23 is formed at midpoint of the extension 22a in the circumferential direction.

In the present embodiment, the dimension L23 in the radial direction of the cutout 23 (see FIG. 6) is equal to the dimension L22 in the radial direction of the inner extension 22 (see FIG. 5). Note however that dimension L23 may be smaller or larger than dimension L22. As viewed along the central axis 5C as shown in FIG. 4, the width W23 of the cutout 23 is less than or equal to the inner diameter ϕ24 of the bolt hole 24. Note however that the width W23 may be larger than the inner diameter ϕ24. Note that the width W23 as used herein refers to the width of a portion of the cutout 23 that is located innermost in the radial direction.

In the present embodiment, as viewed along the central axis 5C, the width of the cutout 23 decreases toward the outer side in the radial direction. In the present embodiment, the edge of the cutout 23 is formed in a curved shape as viewed along the central axis 5C. Note however that there is no particular limitation on the shape of the cutout 23. For example, as viewed along the central axis 5C, the cutout 23 may be formed in a V-letter shape or in a generally rectangular shape.

As shown in FIG. 5, the ring-shaped portion 12 of the wheel hub 10 includes an outer end portion 12a that is located at the outer end of the ring-shaped portion 12 in the radial direction and is continuous with the inner surface 11w of the cylindrical portion 11. The outer end portion 12a is curved so that it is closer to the disc rotor 20 toward the outer side in the radial direction. In FIG. 5, the outer end portion 12a is curved so that it extends rightward toward the lower side. The outer end portion 12a is rounded and not angular.

As described above, the disc rotor 20 is in contact with the cylindrical portion 11 of the wheel hub 10. The inner extension 22 is facing the ring-shaped portion 12 of the wheel hub 10 and is spaced apart from the ring-shaped portion 12. A gap is formed between the inner extension 22 and the ring-shaped portion 12. Thus, a recess 30 that is recessed outward in the radial direction is formed by the ring-shaped portion 12 of the wheel hub 10, the cylindrical portion 11 and the inner extension 22 of the disc rotor 20.

The motorcycle 1 and the disc brake device 7 according to the present embodiment are configured as described above. Next, various effects of the disc brake device 7 according to the present embodiment will be described.

According to the present embodiment, since the disc rotor 20 includes the inner extension 22, the volume of the disc rotor 20 is larger than when the disc rotor 20 does not include the inner extension 22. Therefore, it is possible to increase the heat capacity of the disc rotor 20. Since it is possible to suppress the temperature rise of the disc rotor 20 during braking, it is possible to improve the performance of the disc brake device 7.

However, as the disc rotor 20 includes the inner extension 22, the recess 30 is formed by the disc rotor 20 and the wheel hub 10. While the recess 30 is formed over the entire extent in the circumferential direction, water such as rainwater or mud water splashed up from the road surface, may collect in the lower half of the recess 30 when the motorcycle 1 is parked (in other words, when the rear wheel 5 has stopped rotating). Since the wheel hub 10 and the disc rotor 20 are formed by metal, if water remains collected in the recess 30 for a long period of time, the wheel hub 10 and the disc rotor 20 may possibly corrode. If the wheel hub 10 or the disc rotor 20 corrodes, the wheel hub 10 or the disc rotor 20 may deform, which may cause vibration (judder) when the disc brake device 7 is activated.

According to the present embodiment, however, the cutouts 23 are formed in the inner extension 22. Therefore, water that has entered the recess 30 is discharged through the cutouts 23 (see arrow in FIG. 6). Therefore, water is less likely to collect in the recess 30. Since water is less likely to collect in the recess 30, corrosion is less likely to occur on the wheel hub 10 and the disc rotor 20. Therefore, judder caused by corrosion is unlikely to occur. According to the present embodiment, it is possible to improve the performance of the disc brake device 7 while suppressing judder.

According to the present embodiment, the dimension L23 of the cutout 23 in the radial direction is equal to the dimension L22 of the inner extension 22 in the radial direction. Therefore, the dimension L23 of the cutout 23 in the radial direction is equal to the dimension of the recess 30 in the radial direction. The cutout 23 reaches the deepest portion of the recess 30. Therefore, it is possible to sufficiently suppress collection of water in the recess 30.

According to the present embodiment, as shown in FIG. 4, the cutouts 23 are arranged at equal angular intervals around the central axis 5C. The cutouts 23 are arranged evenly in the circumferential direction. Thus, regardless of the rotational position of the disc rotor 20 when the rear wheel 5 is stopped, water is unlikely to collect in the recess 30.

According to the present embodiment, the inner extension 22 includes a plurality of extensions 22a, each formed between two fastened portions 25 adjacent to each other in the circumferential direction. The recess 30 is formed between each extension 22a and the ring-shaped portion 12 of the wheel hub 10 (see FIG. 4). According to the present embodiment, a cutout 23 is formed for each extension 22a. Since a cutout 23 is provided for each of the recesses 30, water is unlikely to collect in the recesses 30 regardless of the rotational position of the disc rotor 20 when the rear wheel 5 is stopped.

Now, the greater the number of cutouts 23, the smaller the volume of the extensions 22a, and thus the smaller the heat capacity of the disc rotor 20. According to the present embodiment, however, the number of cutouts 23 formed in each extension 22a is one. Since the number of cutouts 23 is small, it is possible to ensure a sufficient volume of the extension 22a. Since it is possible to ensure a sufficient heat capacity of the disc rotor 20, it is possible to improve the performance of the disc brake device 7. Note that the number of cutouts 23 formed in each extension 22a may be two. Even in this case, similar effects can still be achieved because the number of cutouts 23 is small.

According to the present embodiment, the cutout 23 is formed at midpoint of each extension 22a in the circumferential direction. Thus, regardless of the rotational position of the disc rotor 20 when the rear wheel 5 is stopped, water is unlikely to collect in the recess 30.

According to the present embodiment, as shown in FIG. 6, the outer end portion 12a of the ring-shaped portion 12 of the wheel hub 10 is curved so that it is closer to the disc rotor 20 toward the outer side in the radial direction. Therefore, water is unlikely to remain in the outer end portion 12a. It is possible to facilitate discharge of water through the recess 30. Thus, water is unlikely to collect in the recess 30.

One embodiment has been described above. Note however that the embodiment described above is merely an example, and various other embodiments are possible.

While the disc brake device 7 of the embodiment described above is a device for braking the rear wheel 5, the disc brake device 6 for braking the front wheel 4 may also be configured in the same manner as the disc brake device 7 described above. The wheel that the disc brake device disclosed herein brakes may be the front wheel 4 or the rear wheel 5.

One or both of the wheel hub 10 and the disc rotor 20 may not be made of metal.

A "cutout" refers to a portion of the inner extension of the disc rotor that appears to be partially cut out, and there is no limitation on the method of formation. A "cutout" may be such a recess in a disc rotor that is formed as an integral part with a recess, or it may be formed by integrally molding a disc rotor without a recess and then cutting out a portion of the disc rotor.

A straddled vehicle refers to a vehicle that is straddled by a rider. The straddled vehicle is not limited to the motorcycle 1. The straddled vehicle may be an auto tricycle, an ATV (All Terrain Vehicle), or a snowmobile, for example.

### Reference Signs List

1: Motorcycle (straddled vehicle), 5: Rear wheel (wheel), 5C: Central axis of rear wheel, 7: Disc brake device, 10: Wheel hub, 11: Cylindrical portion, 11w: Inner surface of cylindrical portion, 12: Ring-shaped portion, 12a: Outer end portion, 20: Disc rotor, 21: Contact portion, 22: Inner extension, 22a: Extension, 23: Cutout, 24: Bolt hole, 25: Fastened portion, 45: Bolt, 50: Brake caliper, 51: Brake pad

## Claims

1. A disc brake device (7) for braking a wheel (5), comprising:
a wheel hub (10) including a cylindrical portion (11) having an inner surface (11w) and a ring-shaped portion (12) extending from the inner surface (11w) of the cylindrical portion (11) toward a central axis (5C) of the wheel (5);
a ring-shaped disc rotor (20) arranged perpendicular to the central axis (5C) of the wheel (5);
a brake pad (51) facing the disc rotor (20); and
a brake caliper (50) that presses the brake pad (51) against the disc rotor (20), wherein:
the disc rotor (20) includes:
a contact portion (21) to be in contact with the cylindrical portion (11) of the wheel hub (10); and
an inner extension (22) that is located closer to the central axis (5C) of the wheel (5) than the contact portion (21), is facing the ring-shaped portion (12) of the wheel hub (10), and is spaced apart from the ring-shaped portion (12); and
a plurality of cutouts (23), which are recessed outward in a radial direction of the wheel (5), are formed in the inner extension (22).

2. The disc brake device according to claim 1, wherein a dimension (L23) of the cutout (23) in the radial direction of the wheel (5) is equal to a dimension (L22) of the inner extension (22) in the radial direction of the wheel (5).

3. The disc brake device according to claim 1 or 2, wherein the cutouts (23) are arranged at equal angular intervals around the central axis (5C) of the wheel (5).

4. The disc brake device according to any one of claims 1 to 3, wherein:
the disc rotor (20) includes a plurality of fastened portions (25) where bolt holes (24) are formed and which are arranged in a circumferential direction;
the disc brake device includes a plurality of bolts (45) inserted through the bolt holes (24) to fasten together the disc rotor (20) and the wheel hub (10); and
the inner extension (22) includes a plurality of extensions (22a), each formed between two fastened portions (25) adjacent to each other in the circumferential direction.

5. The disc brake device according to claim 4, wherein one or more cutouts (23) are formed in each extension (22a).

6. The disc brake device according to claim 4, wherein one or two cutouts (23) are formed in each extension (22a).

7. The disc brake device according to claim 4, wherein the cutout (23) is formed at midpoint of each extension (22a) in the circumferential direction.

8. The disc brake device according to any one of claims 1 to 7, wherein:
the disc rotor (20) includes a plurality of fastened portions (25) where the bolt holes (24) are formed and arranged in the circumferential direction;
the disc brake device (7) includes a plurality of bolts (45) inserted through the bolt holes (24) to fasten together the disc rotor (20) and the wheel hub (10); and
a width (W23) of the cutout (23) is less than or equal to an inner diameter (ϕ24) of the bolt hole (24) as viewed along the central axis (5C) of the wheel (5).

9. The disc brake device according to any one of claims 1 to 8, wherein a width (W23) of the cutout (23) decreases toward an outer side in the radial direction of the wheel (5) as viewed along the central axis (5C) of the wheel (5).

10. The disc brake device according to any one of claims 1 to 9, wherein:
the ring-shaped portion (12) of the wheel hub (10) includes an outer end portion (12a) that is located at an outer end of the ring-shaped portion (12) in the radial direction and is continuous with the inner surface (11w) of the cylindrical portion (11); and
the outer end portion (12a) is curved so that the outer end portion (12a) is closer to the disc rotor (20) toward an outer side in the radial direction.

11. A straddled vehicle (1) comprising the disc brake device (7) according to any one of claims 1 to 10.
